# EUROPÄISCHE PATENTSCHRIFT

(11) **EP 1 414 646 B1**
(45) Veröffentlichungstag und Bekanntmachung des Hinweises auf die Patenterteilung: **11.10.2006**
(21) Anmeldenummer: 02754958.3
(22) Anmeldetag: 30.07.2002
(51) Int. Cl.: B32B 27/32, C08J 5/18

(54) **TRANSPARENTE BIAXIAL ORIENTIERTE POLYOLEFINFOLIE MIT VERBESSERTEN SIEGELEIGENSCHAFTEN**
TRANSPARENT BIAXIALLY ORIENTED POLYOLEFIN FILM WITH IMPROVED SEALING QUALITIES
FILM POLYOLEFINE TRANSPARENT A ORIENTATION BIAXIALE ET A PROPRIETES DE SCELLAGE AMELIOREES

(30) Priorität: 01.08.2001 DE 10137584
(43) Veröffentlichungstag der Anmeldung: 06.05.2004
(73) Patentinhaber: Treofan Germany GmbH & Co.KG, 66539 Neunkirchen (DE)
(72) Erfinder: BUSCH, Detlef, 66740 Saarlouis (DE); JUNG, Joachim, 66539 Neunkirchen (DE)
(86) Internationale Anmeldenummer: PCT/EP2002/008470
(87) Internationale Veröffentlichungsnummer: WO 2003/013852

(56) Entgegenhaltungen:
- DE-A- 19 718 192
- DE-A- 19 718 199
- US-A- 5 346 763
- US-A- 5 914 079

## Beschreibung

Zur Erhöhung der Oberflächenspannung von Polyolefinfolien werden die Plasma, Flamm- und die Coronabehandlung eingesetzt. Die Folien werden dadurch bedruckbar und mit Beschichtungssystemen auf wäßriger Basis benetzbar. Während die Coronabehandlung bei siegelfähigen und bei nicht siegelfähigen Folien eingesetzt wird, wird die Flammbehandlung hauptsächlich bei nicht siegelfähigen Folien genutzt.

Bei der Flammbehandlung von nicht siegelfähigen Folien wird die Folie über eine Kühlwalze geführt, oberhalb derer ein Gasbrenner angeordnet ist. Der Abstand zwischen Brenner und Folienoberfläche/Kühlwalze wird so gewählt, daß die Oxidationsreaktionen auf der Polymeroberfläche maximal werden. Dabei entstehen oxidierte polare Gruppen, wodurch die Oberflächenspannung der Folie in der gewünschten Weise vergrößert wird.

Es wird gelehrt, die Behandlung von nicht siegelfähigen Folien bei einer Kühlwalzentemperatur von größer als 36 °C durchzuführen (vgl. "The base flame treatment process", H. Angeli/Fa. Esse Ci, 3rd International Meeting on the Plastic Surface Treatment, 1989, Narni, Italien). Unterhalb dieser Temperatur tritt auf der Folienoberfläche Wasserdampfkondensation auf, die die Folie unbrauchbar macht.

Gegenüber der Coronabehandlung weist die Flammbehandlung von nicht siegelfähigen Folien Vorteile auf. Diese sind eine hohe und zeitlich konstante Oberflächenspannung, ein geringer Geruch der Folie und kein Auftreten von Rückseiteneffekt. Nachteilig ist die sehr hohe thermische Belastung der Folienoberfläche.

Im Stand der Technik sind siegelfähige Folien bekannt. Diese siegelfähigen Folien weisen in der Regel Deckschichten aus Co- oder Terpolymeren aus Propylen, Ethylen und/oder Butyleneinheiten auf. Diese Folien sind gegenüber thermischer Belastung empfindlich und werden bei der Flammbehandlung derart geschädigt, daß sie ihre Siegelfähigkeit verlieren. Die Anwendung des oben beschriebenen Verfahrens auf diese siegelfähige Folien ist daher nicht praktikabel. Die thermische Belastung der siegelfähigen Oberfläche ist zu hoch, und bei Erniedrigung der Kühlwalzentemperatur kommt es zu der beschriebenen Wasserdampfkondensation.

Bei siegelfähigen Folien wird daher gelehrt, die Flammbehandlung mit Polarisation anzuwenden (vgl. "The polarized flame process", H. Lori/Fa. Esse Ci, 3rd International Meeting on the Plastic Surface Treatment, 1989, Narni, Italien). Bei dieser Methode wird der Brenner oberhalb der Kühlwalze angeordnet. Zwischen dem Brenner und der Kühlwalze wird dabei eine Gleichspannung angelegt, wodurch die ionisierten Atome in der Flamme eine erhöhte Beschleunigung erhalten und mit größerer kinetischer Energie auf die Polymeroberfläche auftreffen. Die chemischen Bindungen innerhalb der Polymermoleküle werden leichter aufgebrochen, und die Radikalbildung geht schneller vonstatten. Die thermische Belastung der Polymeroberfläche ist geringer als bei der Flammbehandlung ohne Polarisation. Bei gleicher Flammtemperatur wird beim Verfahren mit Polarisation eine höhere Oberflächenspannung erzielt als beim Verfahren ohne Polarisation. Anders ausgedrückt, zur Erzielung der gleichen Oberflächenspannung wird beim Verfahren mit Polarisation eine niedrigere Flammtemperatur benötigt als beim Verfahren ohne Polarisation, wodurch die Siegelschicht geschont wird.

In der EP 0 732 188 ist ein weiteres Verfahren zur Flammbehandlung von siegelfähigen Folien beschrieben. Hierbei wird ebenfalls eine Flamme ohne Polarisation eingesetzt und die Folie auf der Walze stark gekühlt. Die Temperatur der flammbehandelten Folienoberfläche beträgt dabei nach Verlassen der Kühlwalze höchsten 25°C. Diese Verfahren hat den Nachteil, daß man hinsichtlich der Temperaturführung der Folien eingeschränkt ist und zusätzliche Kühivorrichtungen benötigt.

Im Stand der Technik sind Verfahren zur Verbesserung von Hafteigenschaften von Polyolefinfolien, insbesondere Polypropylenfolien bekannt. Üblicherweise werden diese Folie während der Herstellung mittels Plasma, Flamme oder Corona auf einer oder beiden Oberflächen behandelt. Diese Verfahren erhöhen die Oberflächenspannung der Folie und verbessern beispielsweise deren Bedruckbarkeit, Metallisierbarkeit oder die Haftfestigkeit gegenüber sonstigen Beschichtungen.

Der Nachteil dieser bekannten Verfahren liegt darin, daß die erhöhte Oberflächenspannung nach der Folienherstellung kontinuierlich abfällt. Bis es zur Verarbeitung der Folie kommt ist die Oberflächenspannung häufig soweit abgesunken, daß vor der Bedruckung, Metallisierung oder anderen entsprechenden Verarbeitungsschritten eine erneute Oberflächenbehandlung erfolgen muß, um die gewünschte gute Haftfestigkeit sicherzustellen. Dabei werden durch die Nachbehandlung jedoch die ursprünglichen Werte nicht mehr erreicht. Entsprechend sind die Hafteigenschaften dieser Folien, bzw. die durch diese Verfahren erzielten Hafteigenschaften verbesserungswürdig.

US 5,346,763 beschreibt beschreibt eine metallisierbare Folie mit einem dreischichtigen Aufbau. Die Basisschicht ist aus einem HDPE. Die Deckschicht B ist aus einem Maleinsäureanhydrid (MAH) modifizierten PE. Diese Schicht wird metallisiert. Die zweite Deckschicht C ist eine siegelfähige Diese siegelfähige Deckschicht ist aus üblichen nicht modifizierten PropylenPolymeren aufgebaut. Es ist erwähnt, daß die Oberflächenspannung dieser Schicht 34 dynes/cm oder mehr beträgt. Es wird nicht erwähnt diese siegelfähige Schicht einer Oberflächenbehandlung zu unterwerfen, sei es mittels Corona oder mittels Flamme. Hinsichtlich der MAH modifizierten Deckschicht ist im Beispiel beschrieben, daß diese Oberfläche mittels Corona behandelt wird, sowie daß eine Flammbehandlung eingesetzt werden kann. Es ist nicht angegeben, daß die flammbehandelte MAH modifizierte Schicht siegelfähig ist. Die MAH modifizierte flammbehandelte Deckschicht wird metallisiert.

DE 19718192 beschreibt Folien in denen MAH modifizierte Polymere als Haftvermittler-Schichten eingesetzt werden. Die Haftvermittler-Schichten liegen zwischen zwei Schichten deren Haftung aufeinander verbessert werden soll. In einer zweiten Ausführungsform kann das MAH modifizierte Polymere mit einem weiteren Polymeren gemischt werden und als Mischung eine Außenschicht bilden. In diesem Fall enthält die Mischung höchstens 40% des MAH modifizierten Polymeren. Es wird nicht beschrieben die Deckschicht mit MAH-Polymer zur Siegelung zu verwenden, vielmehr soll dieses Schicht mit einer Metallschicht versehen werden. Somit ist eine Corona- oder Flammehandlung der MAH modifizierte Polymeren vorgesehen, aber diese behandelt Schicht wird nicht gesiegelt. Es ist zusätzlich eine gegenüberliegenden spezielle unbehandelte Siegelschicht vorgesehen.

Die Aufgabe der vorliegenden Erfindung bestand daher darin, eine Polyolefinfolie zur Verfügung zu stellen, welche sich durch besonders gute Siegeleigenschaften auszeichnen soll. Dabei ist es insbesondere erforderlich, daß sich die siegelfähige Oberfläche mittels Flamme zur Erhöhung der Oberflächenspannung behandeln läßt, ohne daß dabei die Siegelfähigkeit beeinträchtigt wird. Die Folie soll wirtschaftlich und kostengünstig herstellbar sein. Die übrigen geforderten Gebrauchseigenschaften, insbesondere Glanz und Trübung bei transparenten Ausführungsformen, der Folie dürfen dabei nicht beeinträchtigt werden.

Diese Aufgabe wird gelöst durch Verwendung einer Biaxial orientierten Polyolefinfolie zur Siegelung, wobei die Folie eine Basisschicht, welche aus polyolefinischen Polymeren aufgebaut ist und mindestens eine äußere Deckschicht umfaßt, wobei diese Deckschicht gesiegelt ist und mindestens 50 Gew.-% bezogen auf das Gewicht der Deckschicht eines Maleinsäureanhydrid modifizierten Polyolefins enthält und mittels Flamme auf der Oberfläche der besagten Deckschicht oberflächenbehandelt ist.

Erfindungsgemäß umfaßt die Folie mindestens eine Basisschicht und eine Deckschicht, welche eine äußere Schicht der Folie bildet Im allgemeinen ist die Deckschicht auf einer Oberfläche der Basisschicht aufgebracht. Gegebenenfalls kann auf der gegenüberliegenden Oberfläche der Basisschicht eine weitere, beliebige Deckschicht aufgebracht sein. Auf diese Weise erhält man dreischichtige Ausführungsformen mit einer flammbehandelten und siegelfähigen Deckschicht. Gegebenenfalls können diese dreischichtigen Ausführungsformen durch zusätzliche Zwischenschichten zwischen der Basisschicht und den äußeren Deckschichten modifiziert werden. Auf diese Weise erhält man vier- und fünfschichtige Ausführungsformen der erfindungsgemäßen Folie. Allen Ausführungsformen ist das erfindungswesentliche Merkmal gemeinsam, daß mindestens eine Deckschicht aus einem Maleinsäureanhydrid modifizierten Polyolefin aufgebaut und flammbehandelt ist, aber dennoch siegelfähig bleibt.

Diese Deckschicht der Folie enthält im allgemeinen mindestens 50 Gew.-%, vorzugsweise 80 bis 100 Gew.-%, insbesondere 95 bis <100 Gew.-%, jeweils bezogen auf die Schicht, eines Maleinsäureanhydrid modifizierten Polyolefins, nachstehen MAPO genannt. Neben dem MAPO können weitere Bestandteile der Deckschicht polyolefinische Polymere sein, welche aus Ethylen, Propylen oder Butyleneinheiten aufgebaut sind. Diese Polyolefine sind in einer Menge von 0 bis 50 Gew.-%, vorzugsweise 0 bis 20 Gew.-%, insbesondere >0 bis 5 Gew.-%, jeweils bezogen auf die Deckschicht, enthalten. Zwecks klarer Unterscheidung von den modifizierten Polyolefinen werden diese als Mischungskomponente zusätzlich in der Deckschicht enthaltenen Polyolefine, die nicht modifiziert sind, nachstehend als Polyolefin II bezeichnet. Gegebenenfalls enthält die Deckschicht zusätzlich übliche Additive in jeweils wirksamen Mengen.

Polyolefine II sind beispielsweise Polyethylene, Polypropylene, Polybutylene oder Mischpolymerisate aus Olefinen mit zwei bis acht C-Atomen, worunter Polyethylene und Polyproyplene bevorzugt sind. Polypropylene sind Homopolymere aus Propyleneinheiten oder Mischpolymerisate, wie Co- oder Terpolymere, welche überwiegend aus Propyleneinheiten aufgebaut sind, sie enthalten im allgemeinen mindestens 50 Gew.-%, vorzugsweise 70 bis 99 Gew.-% Propyleneinheiten, bezogen auf das Propylenmischpolymerisat.

Im allgemeinen enthält das Propylenpolymer mindestens 90 Gew.-%, vorzugsweise 94 bis 100 Gew.-%, Propyleneinheiten. Der entsprechende Comonomergehalt von höchstens 10 Gew.-% bzw. 0 bis 6 Gew.-% besteht, wenn vorhanden, im allgemeinen aus Ethylen und Butylen. Die Angaben in Gew.-% beziehen sich jeweils auf das Propylenhomopolymere.

Gegebenenfalls können als Polyolefin II isotaktische Propylenhomopolymere mit einem Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min eingesetzt werden.

Der n-heptanlösliche Anteil der isotaktischen Propylenhomopolymeren beträgt im allgemeinen 1 bis 10 Gew.-%, vorzugsweise 2-5 Gew.-% bezogen auf das Ausgangspolymere.

Bevorzugt werden zusammen mit dem MAPO als Polyolefine II Co-oder Terpolymere in der Deckschicht eingesetzt, vorzugsweise Copolymere von Ethylen und Propylen oder Ethylen und Butylen oder Propylen und Butylen oder Terpolymere von Ethylen und Propylen und Butylen oder Mischungen aus zwei oder mehreren der genannten Co- und Terpolymeren.

Insbesondere sind als Polyolefin II statistische Ethylen-Propylen-Copolymere mit einem Ethylengehalt von 1 bis 10 Gew.-% oder statistische Propylen-Butylen-1-Copolymere mit einem Butylengehalt von 2 bis 25 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, und einem Butylen-1-Gehalt von 2 bis 20 Gew%, jeweils bezogen auf das Gesamtgewicht des Terpolymeren, oder ein Blend aus Ethylen-Propylen-Butylen-1-Terpolymeren und Propylen-Butylen-1-Copolymeren, wobei das Blend einen Ethylengehalt von 0,1 bis 7 Gew.-%, eine Propylengehalt von 50 bis 90 Gew.-% und einem Butylen-1-Gehalt von 10 bis 40 Gew.-%, jeweils bezogen auf das Gesamtgewicht des Polymerblends, aufweist.

Die in der Deckschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen.

Die Molekulargewichtsverteilung der vorstehend beschriebenen Polyolefine II kann je nach Anwendungsgebiet in breiten Grenzen variieren. Das Verhältnis des Gewichtsmittels M_{w} zum Zahlenmittel Mₙ liegt im allgemeinen zwischen 1 und 15, vorzugsweise im Bereich von 2 bis 10. Eine derartig Molekulargewichtsverteilung - erreicht man beispielsweise durch peroxidischen Abbau oder durch Herstellung des Polyolefins mittels geeigneter Metallocenkatalysatoren.

Maleinsäureanhydrid modifizierte Polyolefine sind Polyolefine, die durch den Einbau von Maleinsäureeinheiten hydrophilisiert werden. Diese modifizierten Polyolefine sind im Stand der Technik an sich bekannt und werden auch als gecrafted Polymere bezeichnet. Die Modifizierung erfolgt durch Umsetzung der Polyolefine mit Maleinsäureanhydrid durch geeignete Verarbeitungsschritte. Auch diese Verfahren sind an sich im Stand der Technik bekannt.

Als Basispolyolefine für die Umsetzung mit Maleinsäureanhydrid können grundsätzlich die vorstehend beschriebenen Polyolefine II verwendet werden, wobei für die Zwecke der vorliegenden Erfindung Propylenhomopolymere oder Propylencopolymere oder Propylenterpolymere, welche überwiegend aus Propyleneinheiten aufgebaut sind, im allgemeinen aus mindestens 50 Gew.-%, vorzugsweise 70 bis 99 Gew.-% Propyleneinheiten, bezogen auf das Propylenmischpolymerisat, als Basispolymere für die Modifizierung bevorzugt sind. Die Herstellung dieser Maleinsäureanhydrid modifizierte Polypropylene ist an sich im Stand der Technik bekannt und beispielsweise im US Patent 3,433,777 und US Patent 4,198,327 beschrieben.

Die Dichte nach ASTM D 1505 der modifizierten Polyolefine, vorzugsweise modifizierten Propylenpolymeren, liegt vorzugsweise in einem Bereich von 0,89 bis 0,92 g/cm³, insbesondere 0,9 g/cm³, der Vicat-Erweichungspunkt nach ASTM 1525 liegt in einem Bereich von 120 bis 150°C, insbesondere 140 bis 145°C, die Shore-Härte nach ASTM 2240 beträgt 55 bis 70, vorzugsweise 67°C und der Schmelzpunkt nach ASTM D 2117 liegt in einem Bereich von 140 bis 165°C, vorzugsweise 150 bis 165°C, insbesondere 155 bis 160°C. Der Maleinsäureanteil im modifizierten Polyolefin, vozugsweise Propylenpolymer liegt im allgemeinen , unter 5% bezogen auf das modifizierte Polyolefin, vorzugsweise im Bereich von 0,05 bis 3 %, insbesondere 0,1 bis 1%. Der Schmelzflußindex des modifizierten Polyolefins, vorzugsweise Polypropylens, beträgt im allgemeinen 1 bis 20g/10min, vorzugsweise 3 bis 10g/10min.

Bevorzugt werden zur Modifizierung mit Maleinsäureanhydrid die folgenden Propylenpolymeren eingesetzt:

Isotaktische Propylenhomopolymere mit einem Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min eingesetzt werden. Der n-heptanlösliche Anteil der isotaktischen Propylenhomopolymeren beträgt im allgemeinen 1 bis 10 Gew.-%, vorzugsweise 2-5 Gew.-% bezogen auf das Ausgangspolymere.

Copolymere von Ethylen und Propylen oder Propylen und Butylen oder Terpolymere von Ethylen und Propylen und Butylen oder Mischungen aus zwei oder mehreren der genannten Co- und Terpolymeren.

Insbesondere sind statistische Ethylen-Propylen-Copolymere mit einem Ethylengehalt von 1 bis 10 Gew.-% oder statistische Propylen-Butylen-1-Copolymere mit einem Butylengehalt von 2 bis 25 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, und einem Butylen-1-Gehalt von 2 bis 20 Gew%, jeweils bezogen auf das Gesamtgewicht des Terpolymeren, oder ein Blend aus Ethylen-Propylen-Butylen-1-Terpolymeren und Propylen-Butylen-1-Copolymeren, wobei das Blend einen Ethylengehalt von 0,1 bis 7 Gew.-%, eine Propylengehalt von 50 bis 90 Gew.-% und einem Butylen-1-Gehalt von 10 bis 40 Gew.-%, jeweils bezogen auf das Gesamtgewicht des Polymerblends, aufweist, bevorzugt.

Die vorstehend beschriebenen zur Modifizierung eingesetzten Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Die Deckschicht kann gegebenenfalls zusätzlich übliche Additive wie Neutralisationsmittel, Stabilisatoren, Antistatika, Antiblockmittel und/oder Gleitmittel in jeweils wirksamen Mengen enthalten.

Es wurde gefunden, daß sich die Oberfläche der Deckschicht sehr gut für eine Oberflächenbehandlung mittels Flamme eignet. Die erzielten Werte für die Oberflächenspannungen sind hoch, vorzugsweise im Bereich von 37 bis 50 mN/m, insbesondere 39 bis 45 mN/m. Überraschenderweise ist die Folie auch nach der entsprechenden Flammbehandlung noch immer hervorragend siegelbar und kann daher erfindungsgemäß zur Herstellung von gesiegelten und oberflächenbehandelten Verpackungen verwendet werden. Dies ist insbesondere bemerkenswert im Hinblick auf die im Stand der Technik beschriebene negative Wirkung der Flammbehandlung auf die Siegelfähigkeit. Herkömmliche Deckschichtmaterialien, welche nicht mit Maleinsäureanhydrid modifiziert wurden, verlieren ihre Siegeleigenschaften nach Flammbehandlung nahezu vollständig.

Durch den Einsatz der Flammbehandlung wird darüber hinaus eine Beeinträchtigung der Verarbeitungseigenschaften durch Rückseiteneffekte auf der gegenüberliegenden Oberfläche vermieden. Derartige negative Effekte sind beispielsweise von der Coronabehandlung siegelfähiger Folien bekannt. Im Ergebnis zeigt die Folie auf Grund der Flammbehandlung eine gute Haftung gegenüber Druckfarben, hervorragende Siegeleigenschaften und keine Rückseiteneffekte. Die erzielten Siegelnahtfestigkeiten liegen zwischen 0,7 und 2,5 N/15mm (HAST 130°C, 10N/cm², 0,5 sec). Überraschenderweise liegt die Siegelnahtfestigkeit nach Flammbehandlung in der gleichen Größenordnung wie nach einer Coronabehandlung, d.h. die Siegelung wird durch die Flammbehandlung nicht beeinträchtigt.

Die Basisschicht der Polyolefinfolie ist grundsätzlich aus den vorstehend beschriebenen Polyolefinen II aufgebaut, worunter die beschriebenen Propylenhomopolymere bevorzugt sind, insbesondere isotaktische Propylenhomopolymere. Im allgemeinen enthält die Basisschicht mindestens 70 bis 100, vorzugsweise 80 bis <100Gew.-% Polyolefin bzw. Propylenpolymer. Des weiteren sind in der Basisschicht üblicherweise Neutralisationsmittel und Stabilisatoren, sowie gegebenenfalls weiter übliche Additive in jeweils wirksamen Mengen. Für opake oder weiß-opake Ausführungsformen der Folie enthält die Basisschicht zusätzlich vakuoleninitiierende Füllstoffe und/oder Pigmente. Art und Menge der Füllstoffe sind im Stand der Technik bekannt.

Die Dicke der Deckschicht aus modifiziertem Polyolefin ist größer als 0,1 µm und liegt vorzugsweise im Bereich von 0,3 bis 3 µm, insbesondere 0,4 bis 1,5 µm.

Gegebenenfalls kann die Folie weitere Schichten, vorzugsweise eine zweite Deckschicht, sowie gegebenenfalls einseitig oder beidseitig Zwischenschichten aufweisen.

Die Zwischenschicht/en kann/können aus den beschriebenen Polyolefinen II bestehen und gegebenenfalls üblichen Additive wie Antistatika, Neutralisationsmittel, Gleitmittel und/oder Stabilisatoren, sowie gegebenenfalls Antiblockmittel, enthalten. Die Dicke der Zwischenschicht/en, wenn vorhanden, ist grö□er als 0,3 10 µm und liegt vorzugsweise im Bereich von 1,0 bis 15 10 µm, insbesondere 1,5 bis 10 µm.

Die zweite Deckschicht kann ebenfalls aus den beschriebenen Polyolefinen II aufgebaut sein. Es sind daher siegelfähige und nicht-siegelfähige Ausführungsformen für die zweite Deckschicht möglich. Gegebenenfalls enthält die Deckschicht ähnlich den übrigen Schichten übliche Additive. Die Dicke dieser zweiten Deckschicht beträgt 0,5 bis 5 µm, vorzugsweise 0,5 bis 2,5 µm.

In einer weiteren Ausführungsform kann die zweite Deckschicht wie die erste Deckschicht aus modifizierten Polyolefinen aufgebaut sein und gegebenenfalls flammbehandelt werden, falls eine erhöhte Oberflächenspannung erwünscht ist.

Die Gesamtdicke der erfindungsgemäßen Polyolefinfolie kann innerhalb weiter Grenzen variieren und richtet sich nach dem beabsichtigten Einsatz. Sie beträgt vorzugsweise 4 bis 100 µm, insbesondere 5 bis 80 µm, vorzugsweise 10 bis 50 µm, wobei die Basisschicht etwa 40 bis 98 % der Gesamtfoliendicke ausmacht.

Die Erfindung betrifft weiterhin ein Verfahren zur Herstellung der erfindungsgemäßen Polyolefinfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gestreckt (orientiert), die gestreckte Folie thermofixiert und gegebenenfalls an der zur Behandlung vorgesehenen Oberflächenschicht corona- oder flammbehandelt wird.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die Simultane Streckung kann im Flachfolienverfahren oder im Blasverfahren ausgeführt werden. Die weitere Beschreibung der Folienherstellung erfolgt am Beispiel einer Flachfolienextrusion mit anschließender sequentialer Streckung.

Zunächst wird wie beim Extrusionsverfahren üblich das Polymere bzw. die Polymermischung der einzelnen Schichten in einem Extruder komprimiert und verflüssigt, wobei gegebenenfalls zugesetzte Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekungsverhältnisse liegen im Bereich von 4 bis 8 vorzugsweise 5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 50°C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Erfindungsgemäß wird nach der biaxialen Streckung die Deckschicht aus modifiziertem Polyolefin nach der an sich bekannten Methode flammbehandelt. Verfahren zur Flammbehandlung sind beispielsweise beschrieben in EP 0732 188. Die Behandlungsintensität liegt im allgemeinen im Bereich von 37 bis 50 mN/m, vorzugsweise 39 bis 45 mN/m. Im allgemeinen wird diese Flammbehandlung mittels Flamme ohne Polarisation durchgeführt. Gegebenfalls können auch polarisierte Flammen eingesetzt werden. Die Folie wird während der Flammbehandlung über eine Kühlwalze geführt, wobei oberhalb dieser Walze ein Brenner angebracht ist. Dieser Brenner ist im allgemeinen in einem Abstand von 3 bis 10mm zur Folienoberfläche/Kühlwalze angebracht. Während des Kontaktes mit der Flamme erfährt die Folienoberfläche eine Oxidationsreaktion. Bevorzugt wird die Folie über die Kühlwalze, während der Behandlung gekühlt. Die Walzentemperatur liegt im Bereich von 15 bis 65°C, vorzugsweise 20 bis 50°C.

Die Erfindung wird nun anhand eines Ausführungsbeispiel erläutert:

### Beispiel 1

Es wurde durch Coextrusion und anschließende stufenweise Orientierung in Längs- und Querrichtung eine transparente dreischichtige Folie bestehend aus der Basisschicht B, einer ersten Deckschicht A und einer zweiten Deckschicht C mit einer Gesamtdicke von 30 µm hergestellt. Die erste Deckschicht A hatte eine Dicke von 1,0 µm und die zweite Deckschicht C eine Dicke von 0,7 µm. Die Schichten waren wie folgt zusammengesetzt:

**Basisschicht C:**

| | |
|---|---|
| 99,64 Gew.-% | Propylenhomopolymer mit einem Schmelzpunkt von 165 °C und einem Schmelzflußindex von 3,4g/10min und einem Kettenisotaxie-Index von 94 % |
| 0,10 Gew.-% | Erucasäureamid (Gleitmittel) |
| 0,10 Gew.-% | Armostat 300 (Antistatikum) |
| 0,03 Gew.-% | Neutralisationsmittel (CaCO3) |
| 0,13 Gew.-% | Stabilisator (Irganox) |

**Deckschicht A:**

| | |
|---|---|
| 100 Gew.-% | Maleinsäureanhydrid modifiziertes Polypropylen mit einem Maleinsäuregehalt von 0,1 Gew.-% bezogen auf das Polymere |

**Deckschicht C:**

| | |
|---|---|
| 99,54 Gew.-% | statistisches Copolymer aus Ethylen und Propylen mit einem Schmelzflußindex von 6,0g/10min und einem Ethylengehalt von 6 Gew.-% bezogen auf das Copolymer |
| 0,22 Gew.-% | SiO2 als Antiblockmittel mit einer mittleren Teilchengröße von 4 µm |
| 0,20 Gew.-% | Stabilisator (Irganox 1010 / Irgafos 168) |
| 0,04 Gew.-% | Neutralisationsmittel (CaStearat) |

Die Herstellungsbedingungen in den einzelnen Verfahrensschritten waren:

| | | | |
|---|---|---|---|
| Extrusion: | Temperaturen | Basisschicht B: | 270 °C |
| | | Deckschicht A: | 250 °C |
| | | Deckschicht C: | 270°C |
| | Temperatur der Abzugswalze: | | 30 °C |
| Längsstreckung: | Temperatur: | | 100 °C |
| | Längsstreckverhältnis: | | 1 : 4,5 |
| Querstreckung: | Temperatur: | | 170 °C |
| | Querstreckverhältnis: | | 1 : 9 |
| Fixierung: | Temperatur: | | 140 °C |
| | Konvergenz: | | 10 % |

Die Oberfläche der Deckschicht A wurde mittels einer Flamme behandelt, welche eine Flammtemperatur ca. 690°C hatte. Diese Flamme wurde durch Verbrennung eines Erdgas/Luftgemischs mit einem Durchsatz von 120m3/h erzeugt.

Bei dem Querstreckverhältnis von 1:9 handelt es sich um einen Effektivwert.

Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

Die Folie wies unmittelbar nach der Flammbehandlung eine Oberflächenspannung von 44 mN/m auf der Oberfläche der Deckschicht A auf. Bei der anschließenden Bedruckung zeigte die Folie eine sehr gute Druckfarbenhaftung. Die Folie konnte bei HST (Siegeltemperatur 130°C; Siegeldruck 10N/cm2, Kontaktzeit 0,5 s) Bedingungen gesiegelt werden. Die Siegelnahtfestigkeit einer A/A Siegelnaht betrug 2,0 N/15mm.

### Vergleichsbeispiel 1

Es wurde eine Folie wie in Beispiel 1 hergestellt beschrieben. Im Unterschied zu Beispiel 1 wurde die Deckschicht A mittels Corona oberflächenbehandelt. Die Folie wies ebenfalls gute Siegeleigenschaften auf. Die Folie zeigte jedoch deutliche Rückseiteneffekte auf der gegenüberliegenden Oberfläche, wodurch es beim Abwickeln zu Verblockungen und optischen Störstellen beim Bedrucken der Oberfläche A kam.

### Vergleichsbeispiel 2

Es wurde eine Folie wie in Beispiel 1 beschrieben hergestellt. Im Unterschied zu Beispiel 1 wurde in der Deckschicht A ein nicht modifiziertes Polypropylen Copolymer mit einem Ethylengehalt von ca. 5 Gew.-% eingesetzt. Diese Folie zeigte ohne Flammbehandlung sehr gute Siegeleigenschaften. Nach Flammbehandlung betrug die Siegelnahtfestigkeiten bei gleichen Siegelbedingungen nur noch 0,8 N/15mm.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Oberflächenspannung

Die Oberflächenspannung wurde mittels der sogenannten Tintenmethode (DIN 53 364) bestimmt.

### Bedruckbarkeit

Die vorbehandelten Folien wurden bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Siegelnahtfestigkeit

Zur Bestimmung der Siegelnahtfestigkeit werden zwei Folien mit ihren beiden modifizierten Seiten übereinandergelegt und bei einer Temperatur von 130°C und einer Siegelzeit von 0,5 sec und einem Siegeldruck von 10 N/cm2 in einem Siegelgerät HSG/ETK der Firma Brugger gesiegelt. Aus den gesiegelten Proben werden Prüfstreifen von 15 mm Breite herausgeschnitten. Anschließend werden die beiden Streifen nach der T-Peel Methode in einer Zugprüfmachine bei 200 mm/min auseinander gezogen, wobei die Siegelnahtebene einen rechten Winkel mit der Zugrichtung bildet. Als Siegelnahtfestigkeit wird die zur Trennung der Prüfstreifen erforderliche Kraft angegeben.

## Patentansprüche

1. Verwendung einer coextrudierten, biaxial orientierten Polyolefinfolie zur Siegelung, wobei die Folie eine Basisschicht, welche aus polyolefinischen Polymeren aufgebaut ist und mindestens eine äußere Deckschicht umfaßt, wobei diese Deckschicht gesiegelt ist und mindestens 50 Gew.-% bezogen auf das Gewicht der Deckschicht eines Maleinsäureanhydrid modifizierten Polyolefins enthält und mittels Flamme auf der Oberfläche der besagten Deckschicht oberflächenbehandelt ist.

2. Verwendung nach Anspruch 1 **dadurch gekennzeichnet, daß** der Maleinsäureanteil im modifizierten Polyolefin im Bereich von 0,05 und 5Gew.-% bezogen auf das modifizierte Polyolefin liegt.

3. Verwendung nach Anspruch 1 oder 2, **dadurch gekennzeichnet, daß** das modifizierte Polyolefin einen Schmelzpunkt nach DSC im Bereich von 140 bis 165 °C hat

4. Verwendung nach einem der Ansprüche 1 bis 3, **dadurch gekennzeichnet, daß** das zur Modifizierung eingesetzte Basispolyolefin ein Propylenhomopolymer oder Propylen-Ethylen Copolymer oder ein Propylen-Ethylen-Butylen-Terpolymer ist.

5. Verwendung nach Anspruch 4, **dadurch gekennzeichnet, daß** Propylen-Ethylen Copolymer als Basispolyolefin einen Ethylengehalt im Bereich von 0,5 bis 10 Gew.-%, vorzugsweise 1 bis 5 Gew.-% hat.

6. Verwendung nach einem der Ansprüche 1 bis 5, **dadurch gekennzeichnet, daß** die Deckschicht aus modifiziertem Polyolefin im Bereich von 0,3 bis 3 µm liegt.

7. Verwendung nach einem der Ansprüche 1 bis 6, **dadurch gekennzeichnet, daß** die Deckschicht aus modifiziertem Polyolefin zusätzlich ein nicht modifiziertes Polyolefin, vorzugsweise ein Propylenhomopolymer, ein Propylen-Ethylen-Copolymer oder ein Propylen-Ethylen-Butylen-Terpolymer enthält.

8. Verwendung nach einem der Ansprüche 1 bis 7, **dadurch gekennzeichnet, daß** die Siegelnahtfestigkeit in einem Bereich von 1,0 bis 2,0 N/15mm liegt.

9. Verwendung nach einem der Ansprüche 1 bis 8, **dadurch gekennzeichnet, daß** die Oberflächenspannung nach Flammbehandlung in einem Bereich von 39 bis 50mN/m liegt.

10. Verwendung nach einem der Ansprüche 1 bis 8, **dadurch gekennzeichnet, daß** die Folie eine zweite Deckschicht aufweist.

11. Verwendung nach Anspruch 10, **dadurch gekennzeichnet, daß** die Folie zusätzlich einseitig oder beidseitig eine Zwischenschicht aufweist.

## Claims

**1.** Use of a coextruded, biaxially oriented polyolefin film for sealing, the film comprising a base layer constructed of polyolefinic polymers and at least one outer top layer, the top layer being sealed and containing at least 50 % by wt., based on the weight of the top layer, of a maleic anhydride-modified polyolefin and being surface-treated by means of a flame on the surface of the top layer.

**2.** Use according to claim 1 **characterised in that** the proportion of maleic anhydride in the modified polyolefin is in the region of 0.05 to 5 % by wt, based on the modified polyolefin.

**3.** Use according to claim 1 or 2 **characterised in that** the modified polyolefin has a melting point according to DSC in the region of 140 to 165 °C.

**4.** Use according to one of claims. 1 to 3 **characterised in that** the base polyolefin used for modification is a propylene homopolymer or propylene ethylene copolymer or a propylene ethylene butylene terpolymer.

**5.** Use according to claim 4 **characterised in that**, as base polymer, the propylene ethylene copolymer has an ethylene content in the region of 0.5 to 10 % by wt., preferably 1 to 5 % by wt.

**6.** Use according to one of claims 1 to 5 **charcterised in that** the top layer of modified polyolefin is in the region of 0.3 to 3 µm.

**7.** Use according to one of claims 1 to 6 **characterised in that** the top layer of modified polyolefin additionally contains a non-modified polyolefin, preferably a propylene homopolymer, a propylene ethylene copolymer or a propylene ethylene butylene terpolymer.

**8.** Use according to one of claims 1 to 7 **characterised in that** the strength of the sealing seam is in the region of 1.0 to 2.0 N/15 mm.

**9.** Use according to one of claims 1 to 8 **characterised in that** the film exhibits a second top layer.

**11.** Use according to claim 10 **characterised in that** the film additionally exhibits an intermediate layer on one or both sides.

## Revendications

1. Utilisation d'un film polyéthylène biorienté, coextrudé et destiné au scellage, dans lequel le film comprend une couche de base constituée de polymères polyoléfiniques, ainsi qu'au moins une couche externe de recouvrement, dans lequel cette couche de recouvrement est scellée et contient au moins 50 % en poids, par rapport au poids de la couche de recouvrement, d'une polyoléfine modifiée par l'anhydride maléique et est traitée superficiellement à la flamme sur la surface de ladite couche de recouvrement.

2. Utilisation selon la revendication 1, **caractérisée en ce que** la fraction d'acide maléique dans la polyoléfine modifiée se situe dans le domaine allant de 0,05 à 5 % en poids, par rapport au poids de la polyoléfine modifiée.

3. Utilisation selon la revendication 1 ou 2, **caractérisée en ce que** la polyoléfine modifiée possède un point de fusion, déterminé par calorimétrie différentielle, situé dans le domaine allant de 140 à 165 °C.

4. Utilisation selon l'une des revendications 1 à 3, **caractérisée en ce que** la polyoléfine de base employée en vue de la modification est un homopolymère de propylène ou un copolymère propylène-éthylène ou un terpolymère propylène-éthylène-butylène.

5. Utilisation selon la revendication 4, **caractérisée en ce que** le copolymère propylène-éthylène employé comme polyoléfine de base possède une teneur en éthylène située dans le domaine allant de 0,5 à 10 % en poids, de préférence de 1 à 5 % en poids.

6. Utilisation selon l'une des revendications 1 à 5, **caractérisée en ce que** la couche de recouvrement composée de polyoléfine modifiée a une épaisseur allant de 0,3 à 3 µm.

7. Utilisation selon l'une des revendications 1 à 6, **caractérisée en ce que** la couche de recouvrement composée de polyoléfine modifiée contient de plus une polyoléfine non modifiée, de préférence un homopolymère de propylène, un copolymère propylène-éthylène ou un terpolymère propylène-éthylène-butylène.

8. Utilisation selon l'une des revendications 1 à 7, **caractérisée en ce que** la résistance du cordon de scellage se situe dans un domaine allant de 1,0 à 2,0 N/15 mm.

9. Utilisation selon l'une des revendications 1 à 8, **caractérisée en ce que** la tension superficielle après traitement à la flamme se situe dans un domaine allant de 39 à 50 mN/m.

10. Utilisation selon l'une des revendications 1 à 8, **caractérisée en ce que** le film présente une seconde couche de recouvrement.

11. Utilisation selon la revendication 10, **caractérisée en ce que** le film présente de plus et sur une ou sur les deux faces une couche intermédiaire.
